# EUROPEAN PATENT APPLICATION

(11) **EP 3 605 524 A1**
(43) Date of publication of application: **05.02.2020**
(21) Application number: 18771453.0
(22) Date of filing: 22.03.2018
(51) Int. Cl.: G10K 11/16, B32B 5/02, B60R 13/08, B62D 29/04, F01N 1/24

(54) **SOUND-ABSORBING MATERIAL AND VEHICLE COMPONENT**

(30) Priority: 24.03.2017 JP 2017059509; 11.12.2017 JP 2017237145
(71) Applicant: IBIDEN CO., LTD., Ogaki-shi, Gifu 503-8604 (JP); TOYOTA JIDOSHA KABUSHIKI KAISHA, Toyota-shi Aichi-ken, 471-8571 (JP)
(72) Inventor: SUZUKI, Daisuke, Takahama-shi, Aichi 444-1301 (JP); ITO, Yasutaka, Takahama-shi, Aichi 444-1301 (JP); NAKAMURA, Tomoyoshi, Ibi-gun, Gifu 501-0695 (JP); OHSHIKA, Koji, Takahama-shi Aichi 444-1301 (JP); MABUCHI, Tomoki, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2018/011470
(87) International publication number: WO 2018/174180

(57) **Abstract**

The present invention relates to a sound-absorbing material including a fiber layer, the fiber layer including a plurality of blind holes open to a surface thereof, the fiber layer having a thickness of 3 mm or more.

## Description

### TECHNICAL FIELD

The present invention relates to a sound-absorbing material and a vehicle component.

### BACKGROUND ART

Automobiles include power sources such as engines and motors. Operation of these power sources generates various sounds which are transferred to the interior of a vehicle. Sounds transferred to the interior of a vehicle include not only sounds generated by the automobile itself but also sounds such as road noise and wind noise generated outside of the vehicle during driving of the automobiles.

Thus, soundproofing measures by sound insulation and/or sound absorption are taken in or around an engine, engine room, vehicle interior, vehicle body, exhaust pipe, or the like.

As such soundproofing measures, Patent Literature 1 discloses use of a sound absorption device in an automobile, wherein the sound absorption device includes a sound insulation board and a sound absorption unit that includes a stack of metal foil and a highly breathable fiber mat, the metal foil including numerous holes each having an area of 3 mm² or less and having an opening ratio of 1 to 30%. On the side opposite to the metal foil, a gap is formed between the sound absorption unit and the sound insulation board, and the sound absorption device is disposed on an engine with the metal foil facing the engine.

### CITATION LIST

### - Patent Literature

Patent Literature 1: JP 2000-34938 A

### SUMMARY OF INVENTION

### - Technical Problem

In order to prevent interference of noise with conversation in a vehicle, a sound-absorbing material to be used around the exhaust pipe or engine of an automobile is required to function suitably as a sound-absorbing material in the frequency domain of 500 to 2000 Hz which is the speech range.

In particular, the sound in the frequency domain of 800 to 2000 Hz is unpleasant to the human ear, so that an improvement in sound absorption performance of the sound-absorbing material in this frequency domain is especially expected in order to improve comfortableness in the vehicle.

The sound-absorbing material of Patent Literature 1 was reproduced according to the example. The resulting sound-absorbing material exhibited insufficient sound absorption performance, with an average sound absorption coefficient of less than 0.6 in the low frequency domain of 800 to 2000 Hz.

The present invention was made to solve the above problem, and aims to provide a sound-absorbing material having good sound absorption performance in the frequency domain of 500 to 2000 Hz. More preferably, the present invention aims to provide a sound-absorbing material having sound absorption performance with an average sound absorption coefficient of 0.6 or more in the frequency domain of 800 to 2000 Hz.

### - Solution to Problem

Specifically, a sound-absorbing material according to an embodiment of the present invention includes a fiber layer, the fiber layer including a plurality of blind holes open to a surface thereof, the fiber layer having a thickness of 3 mm or more.

A sound-absorbing material according to another embodiment of the present invention includes a fiber layer and a silica cloth layer formed on the fiber layer, the fiber layer including a plurality of blind holes open to a surface thereof, the fiber layer having a thickness of 3 mm or more.

The silica cloth layer is formed on the surface of the fiber layer to which the blind holes are open.

When the sound-absorbing material further includes the silica cloth layer on the fiber layer, the sound absorption coefficient can be further improved by effect of vibration and air-flow resistance of the silica cloth layer formed on the blind holes.

In the sound-absorbing material of the present invention, the fiber layer includes a plurality of blind holes open to a surface thereof.

When the sound-absorbing material receives sound, the sound is incident to the blind holes open to the surface of the fiber layer. The sound is reflected and attenuated in the blind holes, and absorbed in the fiber layer, whereby the sound is absorbed by the sound-absorbing material.

In the present invention, the side of the fiber layer with a surface to which the blind holes are open is the side that receives sound.

In the sound-absorbing material of the present invention, the fiber layer has a thickness of 3 mm or more.

A fiber layer having a thickness of less than 3 mm is too thin to absorb the sound, failing to provide sufficient sound absorption performance.

In the sound-absorbing material of the present invention, the fiber layer preferably has a thickness of 3 to 50 mm. When the fiber layer has a thickness of more than 50 mm, the sound-absorbing material may be too thick to be placed when used as a vehicle sound-absorbing material for an engine, engine room, vehicle interior, vehicle body, exhaust pipe, or the like.

In the sound-absorbing material of the present invention, the thickness of the fiber layer is the thickness of a portion where no blind hole is formed. Here, the thickness of the fiber layer is an average of arbitrarily selected three points measured using a caliper.

In the sound-absorbing material of the present invention, the blind holes preferably have a depth that is 45 to 55% of the thickness of the fiber layer.

When the depth of the blind holes is 45 to 55% of the thickness of the fiber layer, it is possible to improve the sound absorption performance in the frequency domain of 500 to 2000 Hz, and it is further possible to achieve an average sound absorption coefficient of 0.6 or more in the frequency domain of 800 to 2000 Hz.

The phrase "good sound absorption performance in the frequency domain of 500 to 2000 Hz" means that the average sound absorption coefficient in the frequency domain of 500 to 2000 Hz is 0.46 or more.

In the present invention, the term "sound absorption coefficient" means the sound absorption coefficient measured in accordance with JIS A 1405-2:2007" Acoustics - Determination of sound absorption coefficient and impedance in impedance tubes - Part 2: Transfer-function method". The average sound absorption coefficient in the frequency domain of 500 to 2000 Hz is determined by dividing the frequency domain of 500 to 2000 Hz into 1/3 octave bands and measuring the average sound absorption coefficient at each of 500 Hz, 630 Hz, 800 Hz, 1000 Hz, 1250 Hz, 1600 Hz, and 2000 Hz.

In the sound-absorbing material of the present invention, the blind holes may have any shape, but preferably, the opening area is smaller than the bottom area.

When the opening area of each blind hole is smaller than the bottom area thereof, the sound incident to the blind holes easily stays in the blind holes and is easily absorbed.

In the sound-absorbing material of the present invention, an angle between a wall surface constituting each blind hole and a bottom surface constituting the blind hole is preferably 45° or more and less than 90°.

When an angle between the wall surface constituting each blind hole and the bottom surface is in the above range, the sound incident to the blind holes particularly easily stays in the blind holes and is more easily absorbed.

In the sound-absorbing material of the present invention, the fiber layer preferably includes a stack of two or more fiber layers.

Use of two or more fiber layers facilitates adjusting the thickness of the sound-absorbing material. It also facilitates adjusting the depth of the blind holes.

When the fiber layer includes a stack of two or more fiber layers, the thickness of the fiber layer is the total thickness of the fiber layers.

In the sound-absorbing material of the present invention, the fiber layer preferably contains inorganic fibers.

Inorganic fibers have high heat resistance and are less likely to be deformed by temperature changes. Thus, the fiber layer containing the inorganic fibers can absorb the sound also in the spaces formed by the fibers, easily providing sound absorption performance.

In the sound-absorbing material of the present invention, the inorganic fibers preferably contain at least one selected from the group consisting of alumina fibers, alumina-silica fibers, silica fibers, glass wool, and rock wool.

These inorganic fibers have high heat resistance and are less likely to be deformed by temperature changes. Thus, the inorganic fibers are suitably used to form the fiber layer.

In the sound-absorbing material of the present invention, the opening area per blind hole is preferably 0.1 to 15 mm².

When the opening area per blind hole is less than 0.1 mm², the sound does not easily enter the blind holes, and attenuation from reflection of the sound in the blind holes is less likely to occur, making it difficult to provide sound absorption performance.

When the opening area per blind hole is more than 15 mm², the target sound having a specific frequency is not easily reflected or absorbed in the blind holes. This makes it difficult to provide sound absorption performance.

When the opening area per blind hole is in the range of 0.1 to 15 mm², the sound is easily reflected and absorbed in the blind holes, making it easy to provide sound absorption performance. It also makes it easy to provide sound absorption performance in the low frequency domain of 2000 Hz or less.

The sound-absorbing material of the present invention preferably has an average sound absorption coefficient of 0.6 or more in the frequency domain of 800 to 2000 Hz.

The sound in the frequency domain of 800 to 2000 Hz is unpleasant to the human ear. When the average sound absorption coefficient in this frequency domain is 0.6 or more, the sound unpleasant to the human ear is absorbed, helping people not to feel unpleasant in the vehicle. Thus, the sound-absorbing material is considered to have excellent sound absorption performance.

The average sound absorption coefficient in the frequency domain of 800 to 2000 Hz can determined by dividing the frequency domain of 800 Hz to 2000 Hz into 1/3 octave bands and measuring the average sound absorption coefficient at each of 800 Hz, 1000 Hz, 1250 Hz, 1600 Hz, and 2000 Hz.

In the sound-absorbing material of the present invention, the sound-absorbing material is preferably used for at least one selected from the group consisting of an engine, an engine room, vehicle interior, a vehicle body, and an exhaust pipe.

The sound-absorbing material of the present invention has good sound absorption performance in the frequency domain of 500 to 2000 Hz, and is thus suitable for the above use.

A vehicle component of the present invention includes the sound-absorbing material of the present invention on a surface of a member constituting an engine, engine room component, vehicle interior, vehicle body, or exhaust pipe, with a surface of the fiber layer to which the blind holes are open facing the surface of the member.

The sound-absorbing material of the present invention has excellent sound absorption performance in the frequency domain of 500 to 2000 Hz. Thus, the vehicle component of the present invention including the sound-absorbing material can prevent transfer of sound to the human ear in the vehicle, and can improve the quietness of the vehicle.

### BRIEF DESCRIPTION OF DRAWINGS

Fig. 1(a) is a perspective view schematically showing an exemplary sound-absorbing material of the present invention. Fig. 1(b) is a cross-sectional view taken along line A-A of Fig. 1(a).
Fig. 2(a) and Fig. 2(b) are each a schematic view showing an exemplary arrangement pattern of blind holes open to a surface of a fiber layer of the sound-absorbing material of the present invention.
Fig. 3(a) and Fig. 3(b) are each a cross-sectional view schematically showing an exemplary blind hole constituting the sound-absorbing material of the present invention.
Fig. 4(a) is a perspective view schematically showing another exemplary sound-absorbing material of the present invention. Fig. 4(b) is a cross-sectional view taken along line B-B of Fig. 4(a).
Fig. 5 is a diagram schematically showing a measurement device for measuring the sound absorption coefficient at normal incidence of a sound-absorbing material.

### DESCRIPTION OF EMBODIMENTS

The sound-absorbing material of the present invention is described in detail below.

The sound-absorbing material of the present invention includes a fiber layer, the fiber layer including a plurality of blind holes open to a surface thereof, the fiber layer having a thickness of 3 mm or more.

When the sound-absorbing material receives sound, the sound is incident to the blind holes. The sound is reflected and attenuated in the blind holes, and absorbed in the fiber layer, whereby the sound is absorbed by the sound-absorbing material.

The blind hole is a hole whose opening diameter on the surface of the fiber layer is maintained and which does not penetrate through the fiber layer, among the holes having a diameter of 0.5 mm or more formed in the fiber layer.

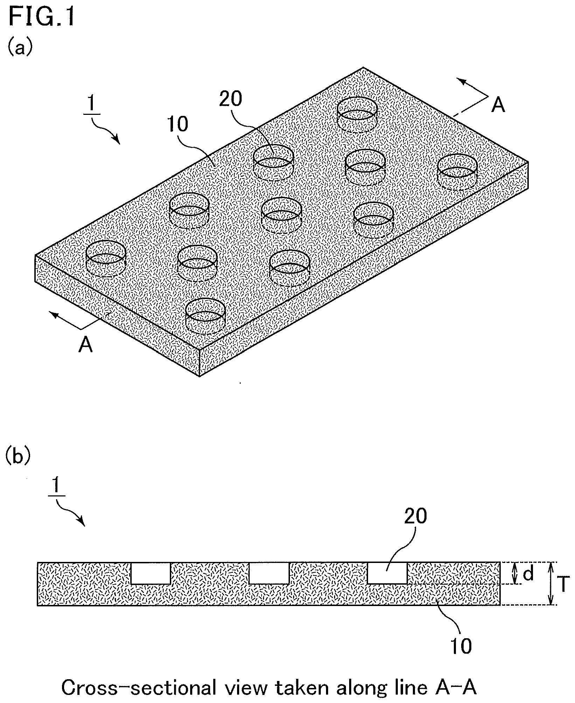

The structure of the sound-absorbing material of the present invention is described with reference to Fig. 1(a) and Fig. 1(b).

Fig. 1(a) is a perspective view schematically showing an exemplary sound-absorbing material of the present invention. Fig. 1(b) is a cross-sectional view taken along line A-A of Fig. 1(a).

As shown in Fig. 1(a), a sound-absorbing material 1 includes a fiber layer 10, and the fiber layer 10 includes blind holes 20 open to a surface thereof. As shown in Fig. 1(b), the thickness (length indicated by a double-headed arrow T in Fig. 1(b)) of the fiber layer 10 is greater than the depth (length indicated by a double-headed arrow d in Fig. 1(b)) of the blind holes 20, so that the blind holes 20 do not penetrate through the fiber layer 10.

The fiber layer constituting the sound-absorbing material of the present invention preferably has a thickness of 3 mm or more, more preferably 3 to 50 mm.

A fiber layer having a thickness of less than 3 mm is too thin to absorb sound, failing to provide sufficient sound absorption performance.

The fiber layer having a thickness of more than 50 mm has no problem in the functional performance and sound absorption performance as the sound-absorbing material. However, when the fiber layer has a thickness of more than 50 mm, the sound-absorbing material may be too thick to be placed when used as a vehicle sound-absorbing material for an engine, engine room, vehicle interior, vehicle body, or exhaust pipe.

In the sound-absorbing material of the present invention, the fiber layer preferably contains inorganic fibers.

Inorganic fibers have high heat resistance and are less likely to be deformed by temperature changes. Thus, the fiber layer containing the inorganic fibers can absorb the sound also in the spaces formed by the fibers, easily providing sound absorption performance.

In the sound-absorbing material of the present invention, the inorganic fibers preferably contain at least one selected from the group consisting of alumina fibers, alumina-silica fibers, silica fibers, glass wool, and rock wool.

These inorganic fibers have high heat resistance and are less likely to be deformed. Thus, the inorganic fibers are suitably used to form the fiber layer.

The inorganic fibers constituting the fiber layer are more preferably alumina-silica fibers.

When the inorganic fibers are alumina-silica fibers, the ratio of components of alumina to silica by weight ratio is preferably alumina (Al₂O₃) :silica (SiO₂) = 60:40 to 80:20, more preferably alumina (Al₂O₃) :silica (SiO₂) = 70:30 to 74:26.

The inorganic fibers preferably have an average fiber length of 0.1 to 150 mm, more preferably 1 to 20 mm, still more preferably 2 to 15 mm.

Inorganic fibers having an average fiber length of less than 0.1 mm are too short, resulting in insufficient entangling of the fibers with each other in the fiber layer, and failing to provide sufficient strength to the fiber layer. Thus, the fiber layer has poor shape retainability, and cannot function as the sound-absorbing material.

Inorganic fibers having an average fiber length of more than 150 mm are too long, making it difficult to produce a fiber layer. Further, the resulting fiber layer has a low density and poor shear strength, so that the sound-absorbing material is susceptible to defects such as cracks, and cannot function as the sound-absorbing material.

The fiber layer constituting the sound-absorbing material can be produced by various methods. For example, a needling method or papermaking method can be used.

The fiber layer obtained by the needling method has an entangled structure. In order to obtain this structure, the fibers need to have a certain average fiber length. Thus, the fibers to be used in the needling method preferably have an average fiber length of 0.1 to 150 mm, more preferably 10 to 20 mm, still more preferably 2 to 15 mm.

Fibers having an average fiber length of less than 0.1 mm are too short, resulting in sufficient entangling of the fibers with each other and failing to provide sufficient strength to the fiber layer. Thus, the fiber layer has poor shape retainability, and cannot function as the sound-absorbing material. Further, when such a sound-absorbing material is wound around a pipe-like structure such as an exhaust pipe, it is poorly wound and is thus easily breakable.

Fibers having an average fiber length of more than 150 mm are too long, resulting in a reduced number of fibers constituting the sound-absorbing material. The resulting fiber layer has a low density, so that the fiber layer, when used as a sound-absorbing material, is susceptible to defects such as cracks.

The average fiber length of the fibers constituting the fiber layer obtained by the papermaking method is preferably 0.1 to 20 mm.

Fibers having an average fiber length of less than 0.1 mm are too short, resulting in poor shape retainability of the fiber layer. Further, such fibers will not be suitably entangled with each other when assembled together as the fiber layer, failing to provide a sufficient contact pressure.

Fibers having an average fiber length of more than 20 mm are too long and thus too strongly entangled with each other in a slurry solution obtained by dispersing the fibers in water in a papermaking step. Such fibers tend to unevenly accumulate when assembled together as the fiber layer, and the resulting fiber layer has poor shear strength. Thus, the fiber layer, when used as a sound-absorbing material, is susceptible to defects such as cracks.

For the measurement of the fiber length, fibers are pulled out using tweezers from the fiber layer produced by the needling method or papermaking method without breaking the fibers, and the fiber length is measured using an optical microscope.

As used herein, the average fiber length is the average length determined by measuring the fiber length of 300 fibers pulled out from the fiber layer. When the fibers cannot be pulled out from the fiber layer without breaking the fibers, the fiber layer may be degreased and introduced into water, so that fibers can be collected without breaking the fibers by separating the fibers from each other.

The fibers forming the fiber layer preferably have an average fiber diameter of 1 to 20 µm, more preferably 2 to 15 µm, still more preferably 3 to 10 µm.

Fibers having an average fiber diameter of less than 1 µm have low strength and are easily broken due to impact or the like. Thus, the fiber layer tends to have low strength and cannot function as the sound-absorbing material.

Fibers having an average fiber diameter of more than 20 µm are too large, resulting in a high young modulus of the fibers and a low flexibility of the fiber layer. Thus, the sound-absorbing material is easily breakable.

The fiber layer of the present invention may contain biosoluble fibers, in addition to the inorganic fibers.

In the sound-absorbing material of the present invention, the fiber layer includes blind holes open to a surface thereof.

The blind holes preferably have a depth that is 45 to 55% of the thickness of the fiber layer.

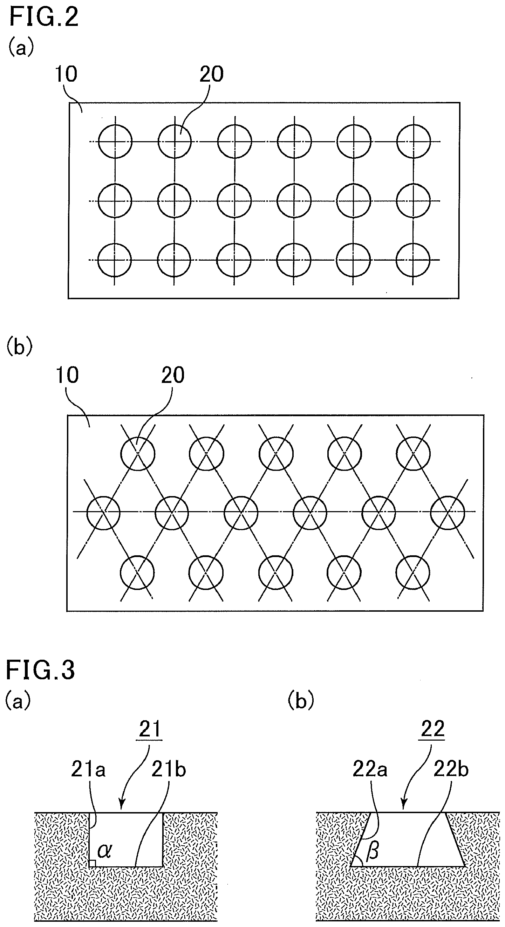

The arrangement pattern of the blind holes in the sound-absorbing material of the present invention is described with reference to Fig. 2(a) and Fig. 2(b).

Fig. 2(a) and Fig. 2(b) are each a schematic view showing an exemplary arrangement pattern of blind holes open to a surface of the fiber layer of the sound-absorbing material of the present invention.

In the sound-absorbing material of the present invention, the blind holes open to the surface of the fiber layer may be arranged in a square pattern as shown in Fig. 2(a) in which squares are continuously arranged in longitudinal and transverse directions and the blind holes 20 are arranged at the corners of the squares in a plan view. Alternatively, the blind holes may be arranged in a zigzag pattern as shown in Fig. 2(b) in which equilateral triangles are continuously arranged in longitudinal and transverse directions and the blind holes 20 are arranged at the corners of the triangles in a plan view.

Of these, the zigzag pattern is preferred. When the blind holes are arranged in the zigzag pattern, all adjacent blind holes tend to have the same interval, providing good sound attenuation efficiency.

In the sound-absorbing material of the present invention, the shape of the blind holes is not limited. The cross-sectional shape of the fiber layer taken along a direction perpendicular to the thickness direction may be circular, elliptical, triangular, quadrangular, hexagonal, octagonal, or the like. Circular and elliptical shapes are preferred because these shapes do not have corners, and thus stress concentration at the corners does not occur.

The blind holes may all have the same shape or different shapes.

In the sound-absorbing material of the present invention, the opening area of each blind hole is preferably smaller than the bottom area thereof.

When the opening area of each blind hole is smaller than the bottom area thereof, the sound incident to the blind holes easily stays in the blind holes and is easily absorbed.

Examples of the shape of the blind hole whose opening area is smaller than its bottom area include a shape in which a through-hole having a relatively small cross-sectional area disposed on the opening side is connected to a through-hole having a relatively large cross-sectional area disposed on the bottom side (also referred to as "Helmholtz resonance structure"), and a tapered pillar shape. The tapered pillar shape is preferred.

When the shape of the blind hole is the tapered pillar shape, the sound that entered the blind holes is easily attenuated in the blind holes, which improves the sound absorption characteristics.

In the sound-absorbing material of the present invention, when the blind holes have a tapered pillar shape, an angle between a wall surface constituting each blind hole and a bottom surface constituting the blind hole is preferably less than 90°, more preferably 45° or more and less than 90°.

When the angle between the wall surface constituting each blind hole and the bottom surface constituting the blind hole is less than 90°, the opening area of the blind hole is smaller than the bottom area thereof. Thus, the sound incident to the blind holes easily stays in the blind holes and is easily absorbed.

In the sound-absorbing material of the present invention, the opening area per blind hole is preferably 0.1 to 15 mm².

When the opening area per blind hole is less than 0.1 mm², the sound does not easily enter the blind holes, and attenuation from reflection of the sound in the blind holes is less likely to occur, making it difficult to provide sound absorption performance.

When the opening area per blind hole is more than 15 mm², the target sound having a specific target frequency is not easily reflected or absorbed in the blind holes. This makes it difficult to provide sound absorption performance.

When the opening area per blind hole is in the range of 0.1 to 15 mm², the sound is easily reflected and absorbed in the blind holes, making it easy to provide sound absorption performance. It also makes it easy to provide sound absorption performance in the low frequency domain of 2000 Hz or less.

Exemplary shapes of the blind holes constituting the sound-absorbing material of the present invention are described with reference to Fig. 3(a) and Fig. 3(b).

Fig. 3(a) and Fig. 3(b) are each a cross-sectional view schematically showing an exemplary blind hole constituting the sound-absorbing material of the present invention.

In a blind hole 21 shown in Fig. 3(a), an angle α between a wall surface 21a constituting the blind hole 21 and a bottom surface 21b constituting the blind hole 21 is 90°. In an blind hole 22 shown in Fig. 3(b), an angle β between a wall surface 22a constituting the blind hole 22 and a bottom surface 22b constituting the blind hole 22 is less than 90°. As shown in Fig. 3(b), when an angle between the wall surface constituting the blind hole and the bottom surface constituting the blind hole is less than 90°, the opening area of the blind hole is smaller than the bottom area thereof. Thus, the sound incident to the blind holes easily stays in the blind holes and is easily absorbed.

In the sound-absorbing material of the present invention, the fiber layer preferably includes a stack of two or more fiber layers.

When the fiber layer includes a stack of two or more fiber layers, the thickness of the sound-absorbing material and the depth of the blind hole are easily adjustable. The two or more fiber layers may be adhered to each other by an adhesive such as an inorganic adhesive or an organic adhesive, but caution is needed not to use an adhesive on a portion corresponding to the bottom of the blind hole so that the adhesive will not interfere with sound absorption.

For example, when adjusting the depth of the blind hole, a through-hole is formed on a first fiber layer but not on a second fiber layer, provided that the first fiber layer is closer to the sound source than the second fiber layer is, and the first fiber layer and the second fiber layer are adhered to each other with an adhesive or the like. In this manner, the sound-absorbing material of the present invention can be produced. Here, the thickness of the sound-absorbing material and the depth of the blind hole can be easily adjusted by adjusting the thickness of each of the first fiber layer and the second fiber layer. Caution is needed to prevent the adhesive from being attached to positions of the surface of the second fiber layer on the side that comes into contact with the first fiber layer, the positions corresponding to the through-holes formed in the first fiber layer.

The material constituting each of the two or more fiber layers may the same as or different from each other.

The thickness of each of the two or more fiber layers may the same as or different from each other. The bulk density of each of the two or more fiber layers may the same as or different from each other.

A sound-absorbing material according to another embodiment of the present invention includes a fiber layer and a silica cloth layer on the fiber layer formed on the fiber layer, the fiber layer including a plurality of blind holes open to a surface thereof, the fiber layer having a thickness of 3 mm or more.

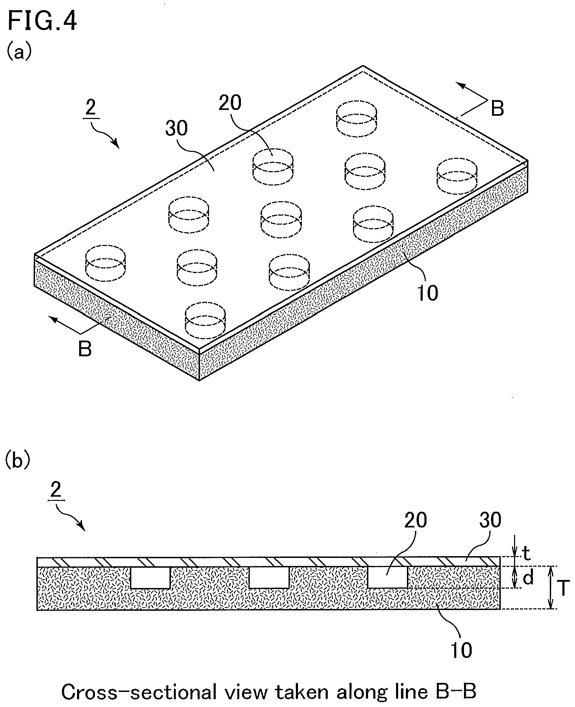

Another embodiment of the sound-absorbing material of the present invention is described with reference to Fig. 4.

Fig. 4(a) is a perspective view schematically showing another exemplary sound-absorbing material of the present invention. Fig. 4(b) is a cross-sectional view taken along line B-B of Fig. 4(a).

As shown in Fig. 4(a), a sound-absorbing material 2 includes the fiber layer 10. The fiber layer 10 includes the blind holes 20 open to a surface thereof. The sound-absorbing material 2 includes a silica cloth layer 30 on the fiber layer 10.

As shown in Fig. 4(b), the silica cloth layer 30 is formed to have a specific thickness t on a surface of the fiber layer 10 to which the blind holes 20 are open, and the silica cloth layer 30 covers the blind holes 20.

The silica cloth layer is a layer made of a fabric containing silica fibers. The silica fibers constituting the silica cloth layer preferably have an average fiber diameter of 5 to 20 µm.

The silica cloth layer preferably has a thickness of 0.5 to 3 mm.

The silica fibers may be woven into a fabric by any method.

The silica cloth layer is a fabric made of silica fibers, and thus has a regular structure of warp and weft. In contrast, the fiber layer is a random aggregate of fibers. Thus, even when the silica fibers are used as the inorganic fibers of the fiber layer, the fiber layer is clearly different from the silica cloth layer in terms of aggregation state of the fibers, physical properties, and the like.

The sound-absorbing material of the present invention preferably has an average sound absorption coefficient of 0.6 or more in the frequency domain of 800 to 2000 Hz.

The sound in the frequency domain of 800 to 2000 Hz is unpleasant to the human ear. When the average sound absorption coefficient in this frequency domain is 0.6 or more, the sound in the frequency domain of 800 to 2000 Hz is absorbed, helping people not to feel unpleasant in the vehicle. Thus, the sound-absorbing material is considered to have excellent sound absorption performance.

The sound-absorbing material of the present invention may have any shape as long as it has a shape that fits in a place where the sound-absorbing material is disposed.

Next, an exemplary method of producing the sound-absorbing material of the present invention is described.

The method of producing the sound-absorbing material of the present invention described below includes (1) a fiber layer producing step and (2) a blind hole forming step.

### (1) Fiber layer producing step

In this step, a fiber layer is prepared. The fiber layer may be prepared by any method. Exemplary methods of preparing the fiber layer, i.e., a needle method (also referred to as a needling method or a needle punching method) and a papermaking method, are described below.

In the case of the needling method, the fiber layer can be produced by the following method, for example. Specifically, first, for example, a spinning mixture formed from raw materials such as an aqueous solution of basic aluminum chloride and a silica sol is spun by blowing to produce an inorganic fiber precursor. Subsequently, the inorganic fiber precursor is compressed into a continuous sheet having a predetermined size. The continuous sheet is needle-punched, and then fired, whereby an inorganic layer having an average fiber diameter of 3 to 10 µm is produced. The continuous sheet may be needle-punched after being fired.

In the case of papermaking, inorganic fibers such as alumina fibers or silica fibers, an inorganic binder, an organic binder, and water are mixed in such a manner that the amount of the inorganic fibers in the raw material solution reaches a predetermined value, followed by stirring with a stirrer. Thus, a mixture is prepared. The mixture may optionally contain a colloidal solution of a high molecular compound or resin. Subsequently, the mixture is poured into a mold having a filtration mesh formed on its bottom, and the water in the mixture is removed through the mesh, whereby a raw material sheet is produced. Then, the raw material sheet is thermally compressed and dried under predetermined conditions, whereby a fiber layer is produced.

### (2) Blind hole forming step

In this step, blind holes are formed in the fiber layer produced in the fiber layer producing step (1).

The method of forming the blind holes is not limited. Examples include a method in which a portion of the fiber layer is cut out using, for example, a cutter, laser, or drill, without penetrating through the fiber layer.

Examples of the method of producing the sound-absorbing material of the present invention also include, in addition to the method described above, a method that includes stacking a plurality of fiber layers.

In this case, the fiber layer producing step (1) includes producing a plurality of fiber layers, and the blind hole forming step (2) is not performed. Instead, through-holes are formed in one of the fiber layers produced, and the fiber layer is adhered to the other fiber layer in which no through-hole are formed. Here, through-holes having a tapered pillar shape may be formed. The fiber layer with the through-holes having a tapered pillar shape is adhered to the fiber layer without through-holes such that the side of the fiber layer on which the opening area is larger faces the fiber layer without a through-hole. Thus, a sound-absorbing material in which the opening area of each blind hole is smaller than the bottom area thereof can be obtained.

With such a method, it is possible to adjust the thickness of the resulting sound-absorbing material and the depth of the blind holes to be formed by adjusting the thickness of each fiber layer produced in the fiber layer producing step (1).

Use of the sound-absorbing material of the present invention is not limited. Yet, the sound-absorbing material is preferably used in vehicles. Specifically, use of the sound-absorbing material for any one of the engine, engine room, vehicle interior, vehicle body, or exhaust pipe is preferred.

The sound-absorbing material of the present invention has good sound absorption performance in the frequency domain of 500 to 2000 Hz, and is thus suitable for the above use.

The sound-absorbing material may be disposed on a curved surface when used for the engine, engine room, vehicle interior, vehicle body, or exhaust pipe. In such a case, the sound-absorbing material needs to be curved. In this case, the sound-absorbing material is susceptible to breaking and cracking due to stress generated therein. Thus, a sound-absorbing material having a shape that fits the shape of the curve may be provided in advance, and disposed on the curved surface. Alternatively, many small sound-absorbing materials may be prepared and disposed on the curved surface to alleviate the stress generated in each sound-absorbing material, whereby breaking and cracking in the sound-absorbing materials can be prevented.

A vehicle component of the present invention is described.

The vehicle component of the present invention includes the sound-absorbing material of the present invention on a surface of a member constituting an engine, engine room component, vehicle interior, vehicle body, or exhaust pipe, with a surface of the fiber layer to which the blind holes are open facing the surface of the member.

The sound-absorbing material of the present invention has excellent sound absorption performance in the frequency domain of 500 to 2000 Hz. Thus, the vehicle component of the present invention including the sound-absorbing material can prevent transfer of sound to the human ear in a vehicle, and can improve the quietness of the vehicle.

### EXAMPLES

Examples that more specifically disclose the present invention are described below, but the present invention is not limited to these examples.

### (Example 1)

### (1) Fiber layer producing step

### (Production of fiber layer)

A fiber layer was produced by the needling method.

An aqueous solution of basic aluminum chloride having an Al content of 70 g/L at a ratio of Al:Cl = 1:1.8 (atomic ratio) was prepared. A silica sol was added to the solution in such a manner that the ratio of components alumina (Al₂O₃) to silica (SiO₂) was 72:28 (weight ratio) in inorganic fibers after firing, followed by addition of an appropriate amount of an organic polymer (polyvinyl alcohol), whereby a mixture was prepared.

The resulting mixture was concentrated into a spinning mixture, and the spinning mixture was spun by blowing. Thus, an inorganic fiber precursor was prepared.

A plurality of spun inorganic fiber precursors were stacked, followed by needling, whereby two sheets were produced.

Each sheet was continuously fired at a maximum temperature of 1250°C. Thus, two fiber sheets each having a length of 600 mm, a width of 200 mm, and a thickness of 7 mm and containing inorganic fibers containing alumina and silica at a weight ratio of 72:28 were produced.

The resulting fiber layers each had a bulk density of 0.15 g/cm³ and a basis weight of 1050 g/m².

### (2) Hole forming step

Next, a punching machine was used on one of the fiber layers obtained to form holes penetrating through the fiber layer. Each hole had a circular shape having a diameter of 3 mm and these holes were arranged in a zigzag pattern with an interval of 8 mm between each hole.

The fiber layer with holes as a first fiber layer was stacked with the fiber layer without holes as a second fiber layer, whereby a sound-absorbing material according to Example 1 was produced. The holes formed in the surface of the first fiber layer are blind holes.

In the sound-absorbing material according to Example 1, the depth of the blind holes was 50% of the thickness of the fiber layer.

### (Example 2)

The thickness of each of the two fiber layers produced in the fiber layer producing step (1) was changed to 6.3 mm and 7.7 mm, without changing their bulk densities. Subsequently, in the hole forming step (2), holes were formed in the same arrangement pattern as that in Example 1 in the fiber layer having a thickness of 6.3 mm. The fiber layer (thickness: 6.3 mm) with holes as a first fiber layer was stacked with the other fiber layer (thickness: 7.7 mm) without holes as a second fiber layer, whereby a sound-absorbing material according to Example 2 was produced.

In the sound-absorbing material according to Example 2, the depth of the blind holes was 45% of the thickness of the fiber layer.

### (Example 3)

A sound-absorbing material according to Example 3 was produced as in Example 2, except that holes were formed in a fiber layer having a thickness of 7.7 mm in the hole forming step (2) and that the fiber layer (thickness: 7.7 mm) with holes as a first fiber layer was stacked with the other fiber layer (thickness: 6.3 mm) without holes as a second fiber layer.

In the sound-absorbing material according to Example 3, the depth of the blind holes was 55% of the thickness of the fiber layer.

### (Example 4)

The thickness of each of the two fiber layers produced in the fiber layer producing step (1) was changed to 3 mm and 11 mm, without changing their bulk densities. Subsequently, in the hole forming step (2), the same holes as those in Example 1 were formed in the fiber layer having a thickness of 3 mm. The fiber layer (thickness: 3 mm) with holes as a first fiber layer was stacked with the other fiber layer (thickness: 11 mm) without holes as a second fiber layer, whereby a sound-absorbing material according to Example 4 was produced.

In the sound-absorbing material according to Example 4, the depth of the blind holes was 21% of the thickness of the fiber layer.

### (Example 5)

Silica cloth having a thickness of 0.6 mm was pasted to a surface of the sound-absorbing material obtained in Example 1 (to the surface to which the blind holes are open), whereby a sound-absorbing material according to Example 5 was obtained.

### (Comparative Example 1)

A sound-absorbing material according to Comparative Example 1 was obtained by stacking two fiber layers without holes, without performing the hole forming step (2).

No through-holes or blind holes were formed in the sound-absorbing material according to Comparative Example 1 (for the sake of convenience, it is also described that the depth of the blind holes relative to the thickness of the fiber layer is 0%).

### (Comparative Example 2)

A sound-absorbing material according to Comparative Example 2 was produced as in Example 1, except that holes were formed in both fiber layers in the hole forming step (2) and that the first fiber layer was pasted to the second fiber layer such that the positons of the holes formed in the first fiber layer coincided with the position of the holes formed in the second fiber layer.

The through-holes were formed in the sound-absorbing material according to Comparative Example 2, but no blind holes were formed therein (for the sake of convenience, it is also described that the depth of the blind holes relative to the thickness of the fiber layer is 100%).

### (Measurement of sound absorption coefficient)

The sound absorption coefficient was determined by testing the sound absorption coefficient at normal incidence. Measurement was performed in accordance with JIS A 1405-2:2007" Acoustics - Determination of sound absorption coefficient and impedance in impedance tubes - Part 2: Transfer-function method".

For the measurement of the sound absorption coefficient, the sound-absorbing materials according to Examples 1 to 5 and Comparative Examples 1 to 2 were cut into circles each having a diameter of 29 mm, and placed in an impedance tube of a measurement device (Nittobo Acoustic Engineering Co., Ltd., model: WinZac MTX) for measuring the sound absorption coefficient at normal incidence. Then, the sound absorption coefficient was measured in the frequency range of 500 to 6400 Hz.

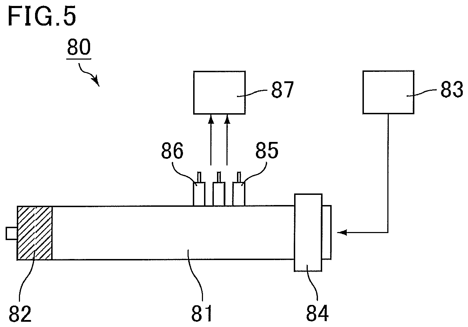

Fig. 5 is a diagram schematically showing the measurement device for measuring the sound absorption coefficient at normal incidence of a sound-absorbing material.

With this measurement device 80, a sample 82 is placed at an edge of the impedance tube 81, and noise is generated from a speaker 84 by a signal from a noise generator 83, and a sound field is generated inside the acoustic tube 81. Then, sound pressure signals of two 1/4-inch microphones 85 and 86 are analyzed by fast Fourier transform (FFT) using an FFT analyzer 87, and the sound absorption coefficient at normal incidence is calculated.

In this measurement, each of the sound-absorbing materials according to Examples 1 to 5 was placed with the surface to which the blind holes were open facing the speaker 84.

Since the sound-absorbing materials according to Comparative Examples 1 and 2 have no blind holes formed therein, each of these sound-absorbing materials was placed with either one of the surface of the fiber layer facing the speaker 84, without considering which surface the blind holes were open to.

From the sound absorption coefficient chart obtained, the average sound absorption coefficient in the frequency domain of 500 to 2000 Hz was measured. The sound-absorbing materials having an average sound absorption coefficient of 0.46 or more were evaluated as having good sound absorption performance, and those having an average sound absorption coefficient of less than 0.46 were evaluated as having poor sound absorption performance. Also, the average sound absorption coefficient in the frequency domain of 800 to 2000 Hz was determined. Table 1 shows the results.

**[Table 1]**

| | Depth of blind holes relative to thickness of fiber layer | Presence or absence of silica cloth layer | Sound absorption performance in frequency domain of 500 to 2000 Hz | Sound absorption performance in frequency domain of 800 to 2000 Hz |
|---|---|---|---|---|
| Example 1 | 50% | Absent | Good | 0.60 |
| Example 2 | 45% | Absent | Good | 0.60 |
| Example 3 | 55% | Absent | Good | 0.60 |
| Example 4 | 21% | Absent | Good | 0.57 |
| Example 5 | 50% | Present | Good | 0.78 |
| Comparative Example 1 | 0% | Absent | Poor | 0.54 |
| Comparative Example 2 | 100% | Absent | Poor | 0.58 |

As shown in Table 1, the sound-absorbing materials according to Examples 1 to 5 each exhibited good sound absorption performance in the frequency domain of 500 to 2000 Hz. Further, the sound-absorbing materials according to Examples 1 to 3 and 5 in which the depth of the blind holes relative to the thickness of the fiber layer was 45 to 55% had an average sound absorption coefficient of 0.6 or more in the frequency domain of 800 to 2000 Hz.

The sound in the frequency domain of 800 to 2000 Hz is unpleasant to the human ear. Thus, the sound-absorbing materials according to Examples 1 to 3 and 5 each in which the average sound absorption coefficient in the frequency domain is 0.6 or more are excellent sound-absorbing materials that help people not to feel unpleasant in the vehicle.

In addition, the sound-absorbing material according to Example 5 in which the silica cloth layer was formed on the fiber layer was particularly excellent in the average sound absorption coefficient in the frequency domain of 800 to 2000 Hz.

In contrast, the sound-absorbing materials according to Comparative Examples 1 and 2 each in which no blind holes were formed in the fiber layer exhibited insufficient sound absorption performance in the frequency domain of 500 to 2000 Hz.

### REFERENCE SIGNS LIST

- 1, 2: sound-absorbing material
- 10: fiber layer
- 20, 21, 22: blind hole
- 21a, 22a: wall surface
- 21b, 22b: bottom surface
- 30: silica cloth layer
- 80: measurement device
- 81: impedance tube
- 82: sample
- 83: noise generator
- 84: speaker
- 85, 86: microphone
- 87: FFT analyzer

## Claims

1. A sound-absorbing material comprising:
a fiber layer,
the fiber layer including a plurality of blind holes open to a surface thereof,
the fiber layer having a thickness of 3 mm or more.

2. A sound-absorbing material comprising:
a fiber layer; and
a silica cloth layer formed on the fiber layer,
the fiber layer including a plurality of blind holes open to a surface thereof,
the fiber layer having a thickness of 3 mm or more.

3. The sound-absorbing material according to claim 1 or 2,
wherein the fiber layer has a thickness of 3 to 50 mm.

4. The sound-absorbing material according to any one of claims 1 to 3,
wherein the blind holes have a depth that is 45 to 55% of the thickness of the fiber layer.

5. The sound-absorbing material according to any one of claims 1 to 4,
wherein the opening area of each blind hole is smaller than the bottom area thereof.

6. The sound-absorbing material according to claim 5,
wherein an angle between a wall surface constituting each blind hole and a bottom surface constituting the blind hole is 45° or more and less than 90°.

7. The sound-absorbing material according to any one of claims 1 to 6,
wherein the fiber layer includes a stack of two or more fiber layers.

8. The sound-absorbing material according to any one of claims 1 to 7,
wherein the fiber layer contains inorganic fibers.

9. The sound-absorbing material according to claim 8,
wherein the inorganic fibers contain at least one selected from the group consisting of alumina fibers, alumina-silica fibers, silica fibers, glass wool, and rock wool.

10. The sound-absorbing material according to any one of claims 1 to 9,
wherein the opening area per blind holes is 0.1 to 15 mm².

11. The sound-absorbing material according to any one of claims 1 to 10,
wherein the sound-absorbing material has an average sound absorption coefficient in a frequency domain of 800 to 2000 Hz of 0.6 or more.

12. The sound-absorbing material according to any one of claims 1 to 11,
wherein the sound-absorbing material is used for at least one selected from the group consisting of an engine, an engine room, vehicle interior, a vehicle body, and an exhaust pipe.

13. A vehicle component comprising:
the sound-absorbing material according to any one of claims 1 to 11 on a surface of a member constituting an engine, engine room component, vehicle interior, vehicle body, or exhaust pipe, with a surface of the fiber layer to which the blind holes are open facing the surface of the member.
